(19) Europäisches Patentamt
European Patent Office
Office européen des brevets

(11) **EP 1 311 751 B1**

(12) **EUROPÄISCHE PATENTSCHRIFT**

(45) Veröffentlichungstag und Bekanntmachung des Hinweises auf die Patenterteilung:
**02.11.2006 Patentblatt 2006/44**

(21) Anmeldenummer: **01955277.7**

(22) Anmeldetag: **26.07.2001**

(51) Int Cl.:
*F02D 41/40* *(2006.01)*

(86) Internationale Anmeldenummer:
**PCT/DE2001/002824**

(87) Internationale Veröffentlichungsnummer:
**WO 2002/014670 (21.02.2002 Gazette 2002/08)**

(54) **VERFAHREN UND VORRICHTUNG ZUR STEUERUNG EINER BRENNKRAFTMASCHINE**

METHOD AND DEVICE FOR CONTROLLING AN INTERNAL COMBUSTION ENGINE

PROCEDE ET DISPOSITIF POUR LA COMMANDE D'UN MOTEUR A COMBUSTION INTERNE

(84) Benannte Vertragsstaaten:
**DE ES FR GB IT**

(30) Priorität: **16.08.2000 DE 10039786**

(43) Veröffentlichungstag der Anmeldung:
**21.05.2003 Patentblatt 2003/21**

(73) Patentinhaber: **ROBERT BOSCH GMBH**
**70442 Stuttgart (DE)**

(72) Erfinder:
• **ZIMMERMANN, Klaus**
**73257 Koengen (DE)**
• **LANG, Tobias**
**71737 Kirchberg (DE)**
• **LEIDECK, Jens**
**70327 Stuttgart (DE)**
• **SASSEN, Klaus**
**71672 Marbach/N (DE)**

(56) Entgegenhaltungen:
**EP-A- 0 570 986**          **EP-A- 0 786 592**
**EP-A- 1 077 321**          **DE-A- 4 133 856**
**US-A- 5 826 425**

**Beschreibung**

Stand der Technik

Die Erfindung betrifft ein Verfahren und eine Vorrichtung zur Steuerung einer Brennkraftmaschine.

Ein Verfahren und eine Vorrichtung zur Steuerung einer Brennkraftmaschine ist beispielsweise aus der MTZ Motortechnische Zeitschrift 58 (1997) Nr. 10 ab Seite 572 beschrieben. Das dort beschriebene System wird üblicherweise als Common-Rail-System bezeichnet. Mit dem dort beschriebenen System ist es möglich, während eines Einspritzzykluses wenigstens eine erste Teileinspritzung und eine zweite Teileinspritzung durchzuführen. Dabei wird üblicherweise neben einer so genannten Haupteinspritzung zusätzlich wenigstens eine Voreinspritzung und/oder wenigstens eine Nacheinspritzung durchgeführt.

Bei einer solchen Ansteuerung mittels zwei Teileinspritzungen muss in der Regel zwischen zwei Teileinspritzungen eine so genannte minimale Ansteuerpause eingehalten werden. Diese dient dazu, dass das System einen definierten Ausgangszustand einnimmt, damit bei der folgenden Ansteuerung nicht ungewollten Einspritzmengenschwankungen auftreten. In der Regel kommt der Genauigkeit einer der Ansteuerungen eine größere Bedeutung zu. Wird beispielsweise eine Nacheinspritzung durchgeführt, die zu Regeneration eines Partikelfilters oder NOx-Katalysators verwendet wird, so muss diese Nacheinspritzung möglichst exakt bezüglich ihrem Förderbeginn und der Menge durchgeführt werden.

Kommt es in dieser Betriebsart zu einer Unterschreitung der minimalen Ansteuerpause zwischen den beiden Ansteuerungen so muss ggf. die Haupteinspritzung entsprechend in Richtung früh verschoben werden. Bei einer Verschiebung der Haupteinspritzung kann dies zur Folge haben, dass bei gleicher Förderdauer sich eine unterschiedliche Einspritzmenge ergibt. Dies ist insbesondere dann der Fall, wenn die Einspritzmenge abhängig von dem Förderbeginn der Einspritzung ist. Dies ist besonders bei nockengetriebenen Einspritzsystemen, wie beispielsweise Pumpe-Düsen-Einheiten und/oder magnetventilgesteuerten Verteilerpumpen der Fall.

Anstelle der Förderdauer können auch andere Größen, die die Förderdauer charakterisieren, verwendet werden. Dies sind beispielsweise die Ansteuerdauer eines Stellgliedes, die Einspritzdauer. Entsprechendes gilt auch für den Förderbeginn. Anstelle des Förderbeginn können auch andere Größen, die den Förderbeginn charakterisieren verwendet werden. Dies sind beispielsweise der Einspritzbeginn oder der Ansteuerbeginn.

Aus der EP-A-0 570 986 ist eine Verfahren und eine Vorrichtung zur Steuerung einer Brennkraftmaschine bekannt, bei der ein Einspritzzyklus in eine Vor- und eine Haupteinspritzung aufgeteilt ist. Dabei ist vorgesehen, dass ein gewisser Mindestabstand zwischen Vor- und Haupteinspritzung eingehalten wird, damit sich der magnetische Fluss im Magnetventil abbauen kann. Wird der Mindestabstand nicht eingehalten erfolgt eine Verschiebung, und damit eine Neuberechnung, der Voreinspritzung.

Dabei tritt die Problematik auf, dass durch eine Verschiebung der Voreinspritzung sich die Menge der Voreinspritzung verändert. Eine neue Berechnung der Förderdauer aufgrund des neuen Förderbeginns hat wiederum eine Veränderung des Abstandes zwischen den beiden Teileinspritzungen zur Folge. Unter ungünstigen Umständen ist eine erneute Korrektur des Förderbeginns notwendig. Dies führt zu einer sehr aufwendigen Berechnung der Ansteuerdaten für die Haupteinspritzung.

Bei der Durchführung einer Voreinspritzung und einer Haupteinspritzung tritt eine ähnliche Problematik auf, wobei in diesem Fall der Haupteinspritzung die größere Priorität zukommt. Des weiteren kann der Fall eintreten, dass der ersten Einspritzung die größere Priorität zukommt und die zweite Einspritzung verschoben wird.

Mit der erfindungsgemäßen Vorgehensweise ist eine einfache Ermittlung der neuen Parameter insbesondere der Ansteuersignale für die beiden Einspritzungen möglich, wobei die minimale Ansteuerpause sicher eingehalten wird. Des weiteren wird der Rechenaufwand deutlich reduziert.

Die Erfindung wird nachstehend anhand der in der Zeichnung dargestellten Ausführungsformen erläutert. Figur 1 zeigt ein Blockdiagramm der erfindungsgemäßen Vorgehensweise, Figur 2 verschiedene über der Zeit aufgetragene Signale, Figur 3 verschiedene Kennfelder und Figur 4 ein Flussdiagramm der erfindungsgemäßen Vorgehensweise.

Beschreibung der Ausführungsbeispiele

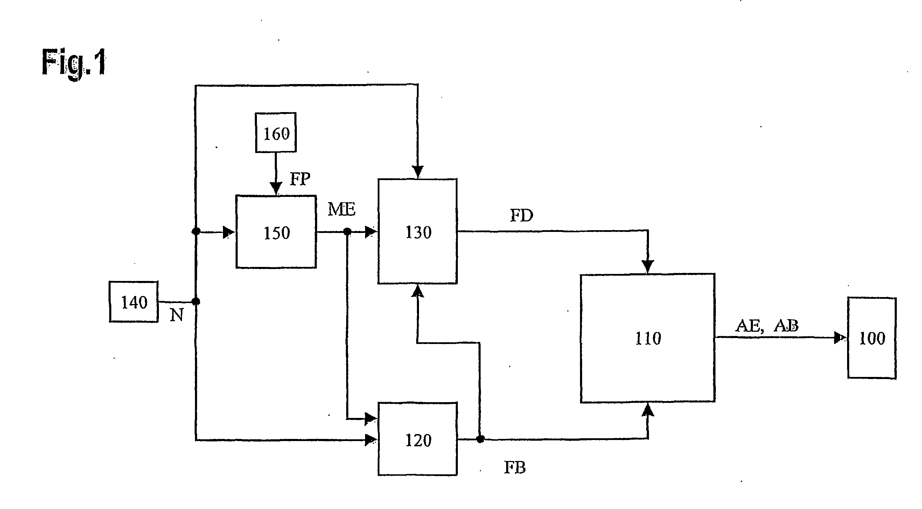

In Figur 1 sind die wesentlichen Elemente, die zum Verständnis der Erfindung wichtig sind, anhand eines Blockdiagrammes dargestellt. Ein Steller 100, der die in die Brennkraftmaschine einzuspritzende Kraftstoffmenge steuert, wird von einer Ansteuerung 110 mit Ansteuersignalen AE und AB beaufschlagt. Das Ansteuersignal AB bestimmt den Ansteuerbeginn und damit den Förderbeginn des Kraftstoffs in die Brennkraftmaschine. Das Ansteuersignal AE bestimmt das Ansteuerende und damit das Einspritzende und die Dauer der Einspritzung. Die Ansteuerung 110 wird von einer Förderbeginnbestimmung 120 und einer Förderdauerbestimmung 130 mit entsprechenden Signalen FB und FD beaufschlagt. Die Förderdauerbestimmung und die Förderbeginnbestimmung beinhalten vorzugsweise Kennfelder, in denen die entsprechenden Größen abhängig von verschiedenen Betriebskenngrößen abgelegt sind. Hierzu werden die Förderdauerbestimmung 130 von einem Drehzahlsensor 140, und einer Mengenvorgabe 150 beaufschlagt. Entsprechend wird auch die Förderbeginnbestimmung 120 mit den entsprechenden Signalen beaufschlagt. Neben den dargestellten Signalen können auch weitere Signale verarbeitet werden. Zusätzlich verarbeitet die Förderdauerbestimmung 130 das Förderbeginnsignal FB der Förderbeginnbestimmung 120. Die Mengenvorgabe 150 beaufschlagt die Förderdauerbestimmung und die Förderbeginnbestimmung mit einem Kraftstoffmengensignal ME. Hierzu wertet sie das Ausgangssignals des Drehzahlsensors 140 und einer Fahrerwunschvorgabe 160 aus.

Ausgehend von wenigstens der Drehzahl N, und dem Fahrerwunsch FP bestimmt die Mengenvorgabe 150 eine, die einzuspritzende Kraftstoffmenge charakterisierende Mengengröße ME. Ausgehend von dieser einzuspritzenden Mengengröße ME, der Drehzahl N und ggf. weiterer Größen bestimmt die Förderbeginnbestimmung 120 ein Signal, dass den Förderbeginn FB charakterisiert. Hierzu wird vorzugsweise eine Winkelstellung der Kurbel- bzw. der Nockenwelle angegeben, bei der die Einspritzung beginnt. Ausgehend von der Drehzahl N und der einzuspritzenden Mengengröße ME bestimmt die Förderdauerbestimmung 130 ein Signal, das die Förderdauer FD charakterisiert. Hierbei handelt es sich vorzugsweise um einen Winkel oder eine Zeit, um die sich die Kurbel- bzw. Nockenwelle drehen muß, während die Kraftstoffeinspritzung erfolgt.

Bei nockengetriebenen Einspritzsystemen, wie beispielsweise bei Pumpe-Düsen-Einheiten oder magnetventilgesteuerten Verteilerpumpen ist die Einspritzmenge abhängig von der Nockengeschwindigkeit und damit vom Förderbeginn der Einspritzung. Daher ist vorgesehen, dass die Förderdauer FD zusätzlich abhängig ist von dem Förderbeginn FB. Ausgehend von dem gewünschten Förderbeginn FB und der Förderdauer FD bestimmt die Ansteuerung 110 Ansteuersignale AB und AE zur Beaufschlagung des Stellers 100. Als Steller werden vorzugsweise Magnetventile oder Piezoaktoren eingesetzt. Abhängig vom Ansteuersignal AB bzw. AE wird der Steller entsprechend angesteuert, dass er die Einspritzung freigibt bzw. unterbricht.

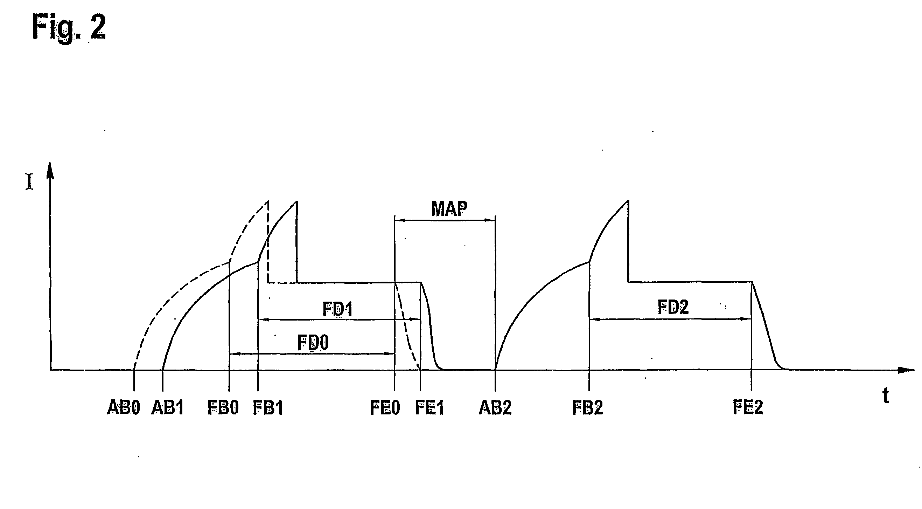

In Figur 2 ist beispielhaft der Strom, der durch ein Magnetventil, das als Steller eingesetzt wird, fließt, über der Zeit t aufgetragen. Mit durchgezogenen Linien sind die Verhältnisse für eine Einspritzung, die in zwei Teileinspritzungen aufgeteilt ist, aufgetragen. Die Größen der ersten Teileinspritzung sind mit 1 und die der zweiten Teileinspritzung mit 2 gekennzeichnet.

Zum Zeitpunkt AB2 erfolgt der Ansteuerbeginn der zweiten Teileinspritzung. Dies hat zur Folge, dass der Strom durch das Magnetventil ansteigt. Zum Zeitpunkt FB2 schaltet das Ventil und die Einspritzung beginnt. Dieser Zeitpunkt wird als Förderbeginn FB2 bezeichnet. Nach dem Schalten des Ventils steigt der Strom noch kurzzeitig an und wird dann auf einen niederen Haltestrom abgeregelt. Zum Zeitpunkt FE2 endet die Ansteuerung und der Strom fällt auf Null ab. Der Abstand zwischen dem Förderbeginn FB2 und dem Förderende FE2 wird als Förderdauer FD2 der zweiten Teileinspritzung bezeichnet.

Zum Ansteuerbeginn AB1 der ersten Teileinspritzung steigt der Strom ebenfalls an, wobei die erste Teileinspritzung zum Zeitpunkt FB1 beginnt und zum Förderende FE1 endet. Die Dauer der ersten Teileinspritzung FD1 ist durch den Förderbeginn FB1 und das Förderende FE1 definiert.

Zwischen den beiden Einspritzungen muß eine minimale Ansteuerpause eingehalten werden. Dies dient dazu, dass das gesamte System einen definierten Ausgangszustand einnehmen kann. Dies bedeutet, nach dem Förderende FE1 der ersten Teileinspritzung bis zum Ansteuerbeginn AB2 der zweiten Teileinspritzung muß ein Mindestabstand MAP eingehalten werden. Wird dieser wie in Figur 2 dargestellt, nicht eingehalten, so müssen entsprechende Maßnahmen eingeleitet werden.

Im dargestellten Ausführungsbeispiel ist als Ansteuerpause der Abstand zwischen Förderende und Ansteuerbeginn definiert. Als Ansteuerpause kann auch der Abstand zwischen Ansteuerende bzw. Förderende der ersten Teileinspritzung und Förderbeginn der zweiten Teileinspritzung definiert sein.

Bei dem dargestellten Ausführungsbeispiel hat die zweite Teileinspritzung eine höhere Priorität und kann aus motortechnischen Gründen nicht verändert werden. Erfindungsgemäß ist daher vorgesehen, dass die erste Teileinspritzung um einen entsprechenden Betrag nach früh verschoben wird, damit der Mindestabstand MAP zwischen dem Förderende der ersten und dem Ansteuerbeginn der zweiten Teileinspritzung eingehalten wird. Eine entsprechend verschobene Teileinspritzung ist mit einer gestrichelten Linie eingezeichnet.

Die entsprechenden Größen wie Förderdauer FD0, Förderbeginn FB0, Förderende FE0 und Ansteuerbeginn AB0 tragen das Kennzeichen 0. Problematisch bei einer solchen Frühverschiebung ist es, dass bei verschiedenen Systemen bei fester Einspritzmenge die Ansteuerdauer vom Förderbeginn abhängt.

Wird ausgehend von dem Ansteuerbeginn AB2 der zweiten Teileinspritzung und dem Mindestabstand MAP das Förderende FE0 der verschobenen ersten Teileinspritzung vorgegeben und ausgehend von dieser Größe und der Förderdauer FD0 der Förderbeginn FB0 der verschobenen Teileinspritzung bestimmt, so muß aufgrund des veränderten Förderbeginns die Förderdauer korrigiert werden, um eine konstante Kraftstoffeinspritzmenge erzielen zu können. Dies wiederum hat zur Folge, dass sich das Förderende FE0 entsprechend verschiebt. Dabei sind zwei Fälle zu unterscheiden. Verlängert sich die Förderdauer aufgrund des geänderten Förderbeginns, so wird der Mindestabstand nicht eingehalten, verkürzt sich die Förderdauer, so wird der Abstand zu groß. In beiden Fällen ist eine erneute Verschiebung des Förderbeginns und eine Veränderung der Förderdauer erforderlich.

Zur Ermittlung der gewünschten Daten für die erste Teileinspritzung ist daher eine Vielzahl von Rechenschritten notwendig, wobei jeweils die Förderdauer aus einem entsprechenden Kennfeld ausgehend von der Drehzahl, der Kraftstoffmenge und/oder dem Förderbeginn berechnet werden muß.

Erfindungsgemäß wird bei einem Verfahren zur Steuerung einer Brennkraftmaschine, bei dem pro Einspritzzyklus wenigstens eine erste Teileinspritzung und eine zweite Teileinspritzung vorgesehen ist, eine der beiden Teileinspritzungen bei Vorliegen bestimmter Betriebszustände verschoben. Ferner wird ein Korrekturwert für eine die Förderdauer charakterisierende Größe abhängig von der Verschiebung der Teileinspritzung bestimmt. In dem dargestellten Ausführungsbeispiel wird eine der beiden Teileinspritzungen verschoben, wenn der Abstand zwischen den beiden Teileinspritzungen kleiner als ein Schwellenwert ist. Die Vorgehensweise ist dabei nicht auf zwei Teileinspritzungen beschränkt. Sie kann auch eingesetzt werden, wenn mehr als zwei Teileinspritzungen pro Zumesszyklus erfolgen. Ferner kann die Vorgehensweise zur Korrektur der Förderdauer auch eingesetzt werden, wenn eine Teileinspritzung aus anderen Gründen vorschoben wird.

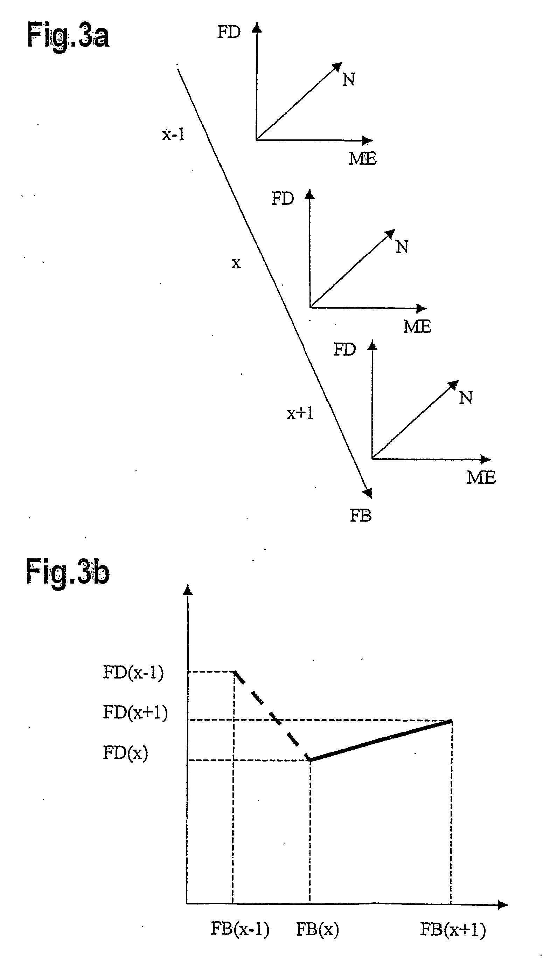

Erfindungsgemäß ist die Förderdauer FD in einem vierdimensionalen Kennfeld, die das wesentliche Element der Förderdauerbestimmung 130 darstellt, abhängig von der Mengengröße ME, der Drehzahl N und dem Förderbeginn FB abgelegt. Zur Verbesserung der oben dargestellten Problematik ist erfindungsgemäß vorgesehen, dass die Förderdauer abhängig für einen Drehzahlwert und einen Kraftstoffmengenwert für drei unterschiedlichen Werte für den Förderbeginn berechnet wird. Diese drei Förderbeginne sind in der Figur 3a mit X-1, mit X und mit X+1 bezeichnet. Für diese drei Förderbeginne ergeben sich in der Regel drei unterschiedliche Förderdauern FD(X-1), FD(X) und FD(X+1). Diese drei Werte für die Förderdauer und den Förderbeginn definieren zwei Geraden. Diese lineare Beziehung zwischen dem Förderbeginn und der Förderdauer gilt lediglich bei fester Drehzahl und fester Einspritzmenge.

Erfindungsgemäß wird nun ausgehend von den drei berechneten Wertepaaren für den Förderbeginn und die jeweilige Förderdauer der Förderbeginn für die verschobene Einspritzung und damit die Förderdauer für die verschobene Einspritzung bestimmt. Dabei wird für den Förderbeginn FB(X) ein Wert früher oder gleich des Förderbeginns der unverschobenen ersten Teileinspritzung und für den Förderbeginn FB(X+1) ein Wert später oder geich des Förderbeginns der unverschobenen ersten Teileinspritzung gewählt. Für den Förderbeginn FD(X-1) wird der frühestmögliche sinnvolle Förderbeginn der verschobenen ersten Teileinspritzung gewählt. In der Regel wird der verschobene Förderbeginn FB0 zwischen dem Wert FD(X-1) und dem Wert FB(X) liegen.

Ausgehend von wenigstens zwei Wertepaaren, die einen Förderbeginn und eine Förderdauer charakterisieren, wird der Korrekturwert für die Förderdauer bestimmt. Die Wertepaare werden vorzugsweise abhängig von einer Größe, die den Förderbeginn charakterisiert, und wenigstens einer weiteren Größe aus einem Kennfeld ausgelesen.

Besonders vorteilhaft ist es, dass die Korrekturwerte abhängig von den wenigstens zwei Wertpaaren mittels einer Interpolation, vorzugsweise einer linearen Interpolation, bestimmt wird.

Eine Ausführungsform einer solchen Interpolation wird im folgenden beschrieben. Der Förderbeginn FB0 der verschobenen ersten Teileinspritzung ergibt sich aus dem Förderende FE0 der verschobenen ersten Teileinspritzung und der Förderdauer FD0 der verschobenen ersten Teileinspritzung gemäß der Formel:

$$FB0 = FE0 - FD0$$

Das Förderende FE0 der verschobenen ersten Teileinspritzung ergibt sich ausgehend von dem Ansteuerbeginn AB2 der zweiten Teileinspritzung und der minimalen Ansteuerpause MAP gemäß der Formel:

$$FE0 = AB2 - MAP$$

Für den verschobenen Förderbeginn FD0 werden die Geradengleichung, die die Geraden der Kennlinien der Figur 3b definieren, eingesetzt.

Ausgehend von diesen beiden Gleichung wird der Förderbeginn FB0 der verschobenen ersten Teileinspritzung bestimmt.

Die Förderdauer FD0 der verschobenen ersten Teileinspritzung ergibt sich dann ausgehend von der Differenz des Förderendes FE0 und des Förderbeginns FB0 der verschobenen ersten Teileinspritzung.

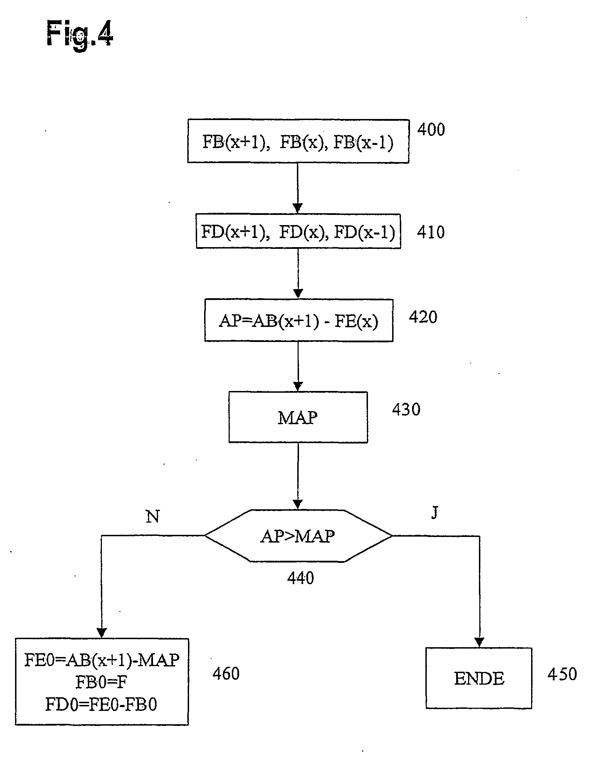

Die entsprechende Vorgehensweise wird im folgenden nochmals an Figur 4 anhand eines Flussdiagrammes verdeutlicht. In einem ersten Schritt 400 werden Förderbeginn FB(X+1) für die erste Teileinspritzung, der Förderbeginn FB(X) der ersten Teileinspritzung und der Förderbeginn FD(X-1) eines Zeitpunkts, der vor einer möglicherweise verschobenen ersten Teileinspritzung liegt, berechnet. Anschließend in Schritt 410 werden die entsprechenden Förderdauern FD(X-1), FD(X) und FD(X+1) aus einem vorzugsweise vierdimensionalen Kennfeld ausgelesen. Im anschließenden Schritt 420 wird die Ansteuerpause AP ausgehend von dem Ansteuerbeginn der zweiten Teileinspritzung und dem Förderende FE(X) der ersten Teileinspritzung bestimmt. Anschließend wird abhängig von verschiedenen Betriebskenngrößen die minimale Ansteuerpause MAP bestimmt.

Die anschließende Abfrage 440 überprüft, ob die Ansteuerpause AP größer oder gleich der minimalen Ansteuerpause MAP ist. Ist dies der Fall, so endet das Programm in Schritt 450 bzw. arbeitet den normalen Programmablauf ab. Ist dies nicht der Fall, so werden wie oben beschrieben, die Daten für das Förderende der verschobenen ersten Teileinspritzung der Förderbeginn der verschobenen Teileinspritzung und die Förderdauer der verschobenen ersten Teileinspritzung in Schritt 460 bestimmt.

### Patentansprüche

1. Verfahren zur Steuerung einer Brennkraftmaschine, wobei pro Einspritzzyklus wenigstens eine erste Teileinspritzung und eine nachfolgende zweite Teileinspritzung vorgesehen sind, dass die erste Teileinspritzung bei Vorliegen bestimmter Betriebszustände verschoben wird, **dadurch gekennzeichnet, dass** der Förderbeginn der ersten Teileinspritzung ausgehend vom Förderbeginn der zweiten Teileinspritzung und wenigstens zwei Wertepaaren für einen Förderbeginn und eine Förderdauer ermittelt wird, dass das Förderende der ersten Teileinspritzung ausgehend von dem Förderbeginn der zweiten Teileinspritzung ermittelt wird und dass die Förderdauer der ersten Teileinspritzung sich ausgehend von dem Förderende und dem Förderbeginn der ersten Teileinspritzung ergibt.

2. Verfahren nach einem der vorhergehenden Ansprüche, **dadurch gekennzeichnet, dass** die Wertepaare abhängig von einer Größe, die den Förderbeginn charakterisiert, und wenigstens einer weiteren Größe aus einem Kennfeld auslesbar ist.

3. Verfahren nach Anspruch 2, **dadurch gekennzeichnet, dass** es sich bei den weiteren Größen um eine Drehzahl und die einzuspritzende Kraftstoffmenge handelt.

4. Verfahren nach einem der vorhergehenden Ansprüche, **dadurch gekennzeichnet, dass** die erste Teileinspritzung verschoben wird, wenn der Abstand zwischen den beiden Teileinspritzungen kleiner als ein Schwellenwert ist.

5. Verfahren nach einem der vorhergehenden Ansprüche, **dadurch gekennzeichnet, dass** die Korrektur abhängig von den wenigstens zwei Wertpaaren mittels einer Interpolation, vorzugsweise einer linearen Interpolation, bestimmt wird.

6. Verfahren nach einem der vorhergehenden Ansprüche, **dadurch gekennzeichnet, dass** das erste Wertpaar den Fördebeginn einer der Teileinspritzungen beinhaltet und das zweite Wertepaar den Förderbeginn einer um einen Maximalwert verschobenen Teileinspritzung beinhaltet.

7. Vorrichtung zur Steuerung einer Brennkraftmaschine, wobei pro Einspritzzyklus wenigstens eine erste Teileinspritzung und eine nachfolgende zweite Teileinspritzung vorgesehen sind, dass die erste Teileinspritzung bei Vorliegen bestimmter Betriebszustände verschoben wird, **dadurch gekennzeich-** **net, dass** Mittel vorgesehen sind, die den Förderbeginn der ersten Teileinspritzung ausgehend vom Förderbeginn der zweiten Teileinspritzung und wenigstens zwei Wertepaaren für einen Förderbeginn und eine Förderdauer ermitteln, die das Förderende der ersten Teileinspritzung ausgehend von dem Förderbeginn der zweiten Teileinspritzung ermitteln und dass sich die Förderdauer der ersten Teileinspritzung ausgehend von dem Förderende und dem Förderbeginn der ersten Teileinspritzung ergibt.

### Claims

1. Method for controlling an internal combustion engine wherein at least a first partial injection and a subsequent second partial injection are provided for each injection cycle, **characterized in that** the first partial injection is delayed when certain operating conditions are present, **in that** the start of delivery of the first partial injection is determined from the start of delivery of the second partial injection and at least two pairs of values for the start of delivery and the duration of delivery, **in that** the end of delivery of the first partial injection is determined from the start of delivery of the second partial injection, and **in that** the duration of delivery of the first partial injection results from the end of delivery and the start of delivery of the first partial injection.

2. Method according to one of the preceding claims, **characterized in that** the pairs of values can be read from a characteristic field depending on a variable, which characterizes the start of delivery, and at least one further variable.

3. Method according to Claim 2, **characterized in that** the further variables are a rotation speed and the amount of fuel to be injected.

4. Method according to one of the preceding claims, **characterized in that** the first partial injection is delayed when the interval between the two partial injections is less than a threshold value.

5. Method according to one of the preceding claims, **characterized in that** the correction depending on the at least two pairs of values is determined by means of interpolation, preferably linear interpolation.

6. Method according to one of the preceding claims, **characterized in that** the first pair of values includes the start of delivery of one of the partial injections, and the second pair of values includes the start of delivery of a partial injection delayed by a maximum value.

**7.** Device for controlling an internal combustion engine wherein at least a first partial injection and a subsequent second partial injection are provided for each injection cycle, **characterized in that** the first partial injection is delayed when certain operating conditions are present, **in that** means are provided, which determine the start of delivery of the first partial injection from the start of delivery of the second partial injection and at least two pairs of values for the start of delivery and the duration of delivery, and which determine the end of delivery of the first partial injection from the start of delivery of the second partial injection, and **in that** the duration of delivery of the first partial injection results from the end of delivery and the start of delivery of the first partial injection.

## Revendications

**1.** Procédé de commande d'un moteur à combustion interne, dans lequel on prévoit pour chaque cycle d'injection au moins une première injection partielle suivie d'une deuxième injection partielle, la première injection partielle étant décalée pour certains états de fonctionnement
**caractérisé en ce qu'**
on détermine le début d'alimentation de la première injection partielle à partir du début d'alimentation de la deuxième injection partielle et d'au moins deux paires de valeurs pour un début d'alimentation et une durée d'alimentation,
on détermine la fin d'alimentation de la première injection partielle à partir du début d'alimentation de la deuxième injection partielle, et
la durée d'alimentation de la première injection partielle se définit par la fin d'alimentation et le début d'alimentation de la première injection partielle.

**2.** Procédé selon l'une quelconque des revendications précédentes,
**caractérisé en ce que**
les paires de valeurs sont fonction d'une grandeur caractérisant le début d'alimentation et d'au moins une autre grandeur extraite d'un champ des caractéristiques.

**3.** Procédé selon la revendication 2,
**caractérisé en ce que**
les autres grandeurs sont une vitesse de rotation et la quantité de carburant à injecter.

**4.** Procédé selon l'une quelconque des revendications précédentes,
**caractérisé en ce que**
la première injection partielle est décalée si l'intervalle entre les deux injections partielles est inférieur à une valeur de seuil.

**5.** Procédé selon l'une quelconque des revendications précédentes,
**caractérisé en ce que**
la correction est déterminée en fonction d'au moins deux paires de valeurs au moyen d'une interpolation, de préférence une interpolation linéaire.

**6.** Procédé selon l'une quelconque des revendications précédentes,
**caractérisé en ce que**
la première paire de valeurs contient le début d'alimentation de l'une des injections partielles et la deuxième paire de valeurs contient le début d'alimentation d'une injection partielle décalée d'une valeur maximale.

**7.** Dispositif de commande d'un moteur à combustion interne, dans lequel on prévoit pour chaque cycle d'injection au moins une première injection partielle suivie d'une deuxième injection partielle, la première injection partielle étant décalée pour certains états de fonctionnement
**caractérisé en ce que**
des moyens déterminent le début d'alimentation de la première injection partielle à partir du début d'alimentation de la deuxième injection partielle et d'au moins deux paires de valeurs pour un début d'alimentation et une durée d'alimentation, déterminent la fin d'alimentation de la première injection partielle à partir du début d'alimentation de la deuxième injection partielle, et la durée d'alimentation de la première injection partielle se définit par la fin d'alimentation et le début d'alimentation de la première injection partielle.

**Fig.1**

EP 1 311 751 B1

## Fig. 2

EP 1 311 751 B1

## Fig.3a

## Fig.3b

# Fig.4

$$FB(x+1), \; FB(x), FB(x-1) \quad 400$$

$$FD(x+1), \; FD(x), FD(x-1) \quad 410$$

$$AP{=}AB(x+1) - FE(x) \quad 420$$

$$MAP \quad 430$$

N      AP>MAP      J

440

$$FE0{=}AB(x+1){-}MAP$$
$$FB0{=}F$$
$$FD0{=}FE0{-}FB0 \quad 460$$

ENDE    450